(19) Europäisches Patentamt
European Patent Office
Office européen des brevets

(11) **EP 3 955 351 A1**

(12) **EUROPEAN PATENT APPLICATION**
published in accordance with Art. 153(4) EPC

(43) Date of publication:
**16.02.2022 Bulletin 2022/07**

(21) Application number: **20787773.9**

(22) Date of filing: **08.04.2020**

(51) International Patent Classification (IPC):
**H01M 8/02** (2016.01)   **H01M 8/10** (2016.01)
**H01M 8/18** (2006.01)

(52) Cooperative Patent Classification (CPC):
**H01M 8/02; H01M 8/10; H01M 8/18;** Y02E 60/50

(86) International application number:
**PCT/JP2020/015759**

(87) International publication number:
**WO 2020/209274 (15.10.2020 Gazette 2020/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **08.04.2019   JP 2019073282**

(71) Applicant: **Arm Technologies Co., Ltd.
Sagamihara City, Kanagawa 252-0131 (JP)**

(72) Inventors:
• **ARAKI, Noritoshi
Sagamihara City, Kanagawa 252-0131 (JP)**
• **ARAKI, Kaori
Sagamihara City, Kanagawa 252-0131 (JP)**

(74) Representative: **Maidment, Marc et al
Albright IP Limited
County House
Bayshill Road
Cheltenham, Glos. GL50 3BA (GB)**

(54) **NEGATIVE ELECTRODE ELECTROLYTE SOLUTION FOR REDOX FLOW BATTERIES, AND REDOX FLOW BATTERY**

(57)     A negative electrode electrolyte solution for a redox flow battery includes a negative electrode active material, a negative electrode supporting salt, and a negative electrode solvent, in which the negative electrode solvent is a solvent having an octanol-water partition coefficient $LogP_{ow}$ expressed by LogP of 1.5 or more.

FIG. 1

**Description**

Technical Field

The present invention relates to a negative electrode electrolyte solution for a redox flow battery and a redox flow battery.

Background Art

In recent years, as environmental issues become more serious, power generation facilities using natural energy such as wind power generation and solar power generation have rapidly spread worldwide. Power generation from natural energy has problems such as an unstable amount of power generation, difficult supply according to power demands, an easy output fluctuation, and a large influence on a system line. One of countermeasure techniques focus on installing a large-capacity storage battery to smooth the output fluctuation, save surplus power, and level a load.

A redox flow battery is known as such a large-capacity storage battery for energy storage. Since the redox flow battery does not use a combustible or explosive substance, the redox flow battery has advantages of excellent stability, long life even after repeated charging and discharging, high durability, low cost, and less frequent maintenance. Further, since an active material can be stored in an external tank, the redox flow battery has an advantage that it is easy to increase a size and a capacity.

Since the redox flow battery stores energy in a liquid, an energy replenishment process of, for example, an electric vehicle is completed by replenishing, filling, and exchanging a charged liquid in advance. Thus, a time required for charging can be significantly reduced as compared with a charging time of a current electric vehicle equipped with a lithium ion battery.

As the redox flow battery, there is disclosed, for example, a redox flow battery including a positive half-cell, a negative half-cell, a separator separating the two half-cells, two electrodes, and two electrolyte containers outside the battery, and the positive half-cell and the negative half-cell each contain an electrolyte containing at least one ionic liquid (see, for example, Patent Literature 1) .

Citation List

Patent Literature

Patent Literature 1: Japanese Patent No. 5468090

Summary of Invention

Technical Problem

However, in an electrolyte solution of the redox flow battery disclosed in Patent Literature 1, when water intrudes into the electrolyte, electrolysis of water occurs to generate hydrogen gas and oxygen gas, which may deteriorate the redox flow battery. Deterioration of the redox flow battery causes a problem that an energy density of the redox flow battery decreases.

An aspect of the present invention is made in consideration of the above circumstances, and an object thereof is to provide a negative electrode electrolyte solution for a redox flow battery capable of having a high voltage and a high energy density when used in a redox flow battery.

Solution to Problem

A first aspect of a negative electrode electrolyte solution for a redox flow battery according to the present invention contains a negative electrode active material, a negative electrode supporting salt, and a negative electrode solvent. The negative electrode solvent is a solvent having an octanol-water partition coefficient $LogP_{ow}$ expressed by LogP of 1.5 or more.

A second aspect of the present invention is the negative electrode electrolyte solution for a redox flow battery according to the first aspect, in which the negative electrode solvent contains an ether group.

A third aspect of the present invention is the negative electrode electrolyte solution for a redox flow battery according to the second aspect, in which an anion of the negative electrode supporting salt is one or more components selected from the group consisting of $N(SO_2CF_3)_2$, $N(SO_2CH_3)_2$, $N(SO_2C_4H_9)_2$, $N(SO_2C_2F_5)_2$, $N(SO_2C_4F_9)_2$, $N(SO_2F_3)(SO_2C_4F_9)$, $N(SO_2C_2F_5)(SO_2C_4F_9)$, $N(SO_2C_2F_4SO_2)$, $N(SO_2F)_2$, and $N(SO_2F)(SO_2CF_3)$ .

A fourth aspect of the present invention is the negative electrode electrolyte solution for a redox flow battery according to the second or third aspect, in which the negative electrode solvent is one or more components selected from the group consisting of methoxycyclopentane, diethylene glycol dibutyl ether, and ethylene glycol dibenzyl ether.

A fifth aspect of the present invention is the negative electrode electrolyte solution for a redox flow battery according to the first aspect, in which the negative electrode solvent is one or more components selected from the group consisting of 1-methyl-1-propylpyrrolidinium bis(trifluoromethanesulfonyl)imide, 1-methyl-1-propylpyrrolidinium bis(fluoromethanesulfonyl)imide, triethyl-(2-methoxyethyl)phosphonium bis(trifluoromethanesulfonyl)imide, and triethyl-(2-methoxyethyl)phosphonium bis(fluoromethanesulfonyl)imide.

A sixth aspect of the present invention is the negative electrode electrolyte solution for a redox flow battery according to any one of the first to fifth aspects, in which the negative electrode solvent has a solubility of 5 g or less in 100 g of water at room temperature.

A redox flow battery of the present invention includes:

a positive electrode electrolyte solution;
a positive electrode current collector that oxidizes and reduces a positive electrode active material contained in the positive electrode electrolyte solution;
a negative electrode electrolyte solution;
a negative electrode current collector that oxidizes and reduces a negative electrode active material contained in the negative electrode electrolyte solution; and
an ion-conductive separator that separates the positive electrode electrolyte solution and the negative electrode electrolyte solution, in which
the negative electrode electrolyte solution is the negative electrode electrolyte solution for a redox flow battery according to any one of the first to sixth aspects.

Advantageous Effects of Invention

According to one aspect of a negative electrode electrolyte solution for a redox flow battery according to the present invention, the negative electrode electrolyte solution for a redox flow battery can have a high voltage and a high energy density when used in a redox flow battery.

Brief Description of Drawings

[Figure 1] Figure 1 is a cross-sectional view schematically showing a redox flow battery using a negative electrode electrolyte solution for a redox flow battery according to an embodiment of the present invention.
[Figure 2] Figure 2 is an explanatory view showing an example of a flow of electrons during discharging in a redox flow battery system.
[Figure 3] Figure 3 is an explanatory view showing an example of a flow of electrons during charging in the redox flow battery system.

Description of Embodiments

Hereinafter, embodiments of the present invention will be described in detail. A scale of each member in drawings may be different from an actual scale. In the description, "to" indicating a numerical range means that numerical values described before and after "to" are included as a lower limit value and an upper limit value unless otherwise specified.

<Negative Electrode Electrolyte Solution for Redox Flow Battery>

A negative electrode electrolyte solution for a redox flow battery according to an embodiment of the present invention (hereinafter, simply referred to as a "negative electrode electrolyte solution") is a negative electrode electrolyte solution used for a redox flow battery, and contains a negative electrode active material, a negative electrode solvent, and a negative electrode supporting salt.

(Negative Electrode Active Material)

As the negative electrode active material, a negative electrode solid active material and an organic active material that is liquid at room temperature can be used.

As the negative electrode solid active material, lithium, sodium, potassium, calcium, magnesium, aluminum, graphite, hard carbon, soft carbon, silicon, silicon oxide, tin, lithium titanate, titanium oxide, molybdenum oxide, sulfur, and zinc can be used. These may be used alone or in combination of two or more thereof. Among these, graphite is particularly preferably used.

When the negative electrode solid active material is used as the negative electrode active material, the negative electrode electrolyte solution may contain a mediator that is an electron transfer mediator from the negative electrode current collector to the negative electrode active material, or a conductive agent such as copper or carbon.

When the organic active material that is liquid at room temperature is used as the negative electrode active material, the organic active material can be mixed with the negative electrode solvent in a high concentration. As such an organic active material that is liquid at room temperature, 2-methylquinoxaline, 2-methyl-3-propylquinoxaline, 2-methoxy-3-methylpyrazine, 2,3,5-trimethylpyrazine, 2,3-dimethylpyrazine, 2,5-dimethylpyrazine, 2-ethylpyrazine, 2-propylpyrazine, 2-ethoxypyrazine, 2-methoxypyrazine, chloropyrazine, 4-tert-butylpyrazine, 2,6-di-tert-butylpyridine, 2,5-difluoropyrazine, 2,3,5,6-tetramethylpyrazine, 3-ethylbiphenyl, 2-methylnaphthalene, 1-methylnaphthalene, and 2-methylpyrazine can be used. These may be used alone or in combination of two or more thereof. Among these, 2,3,5-trimethylpyrazine and 2-methylquinoxaline are preferably used.

(Negative Electrode Solvent)

The negative electrode solvent is a solvent having an octanol-water partition coefficient $LogP_{ow}$ expressed by LogP of 1.5 or more. The $LogP_{ow}$ is preferably 1.8 or more, and more preferably 3.4 or more. The partition coefficient $LogP_{ow}$ is an octanol/water partition coefficient, that is, a coefficient indicating a partition degree when an organic solvent is partitioned between an octanol phase and an aqueous phase. The $LogP_{ow}$ is expressed by, for example, the following equation (1). In the following equation (1), $C_o$ is a molar concentration of an organic solvent in the octanol phase, and $C_w$ is a molar concentration of an organic solvent in the aqueous phase.

$$LogP_{ow} = Log(C_o/C_w) \quad \cdots \quad (1)$$

The negative electrode solvent is preferably a hydrophobic solvent. In the present embodiment, regarding hydrophobicity, the hydrophobic solvent is defined as a solvent having a solubility of 5 g or less in 100 g of water at room temperature ($23°C \pm 2°C$). A solvent having a solubility of 5 g or less in 100 g of water at room temperature is preferably used, and a solvent having a solubility of 1 g or less in 100 g of water at room temperature is more preferably used.

The negative electrode solvent preferably includes an ether group, and preferably has a structure including an ether group. Since the negative electrode electrolyte solution is an electrolyte solution on a negative electrode side, the negative electrode electrolyte solution is mainly used under a reducing atmosphere. As the redox flow battery, in order to achieve a higher voltage, the oxidation-reduction potential of the negative electrode active material is preferably lower. That is, it is preferable that the negative electrode solvent does not cause reductive decomposition at a potential equal to or lower than at least the oxidation-reduction potential of the negative electrode active material to be used. Since the ether group hardly causes reductive decomposition and can enhance reduction resistance of the negative electrode solvent, the negative electrode solvent preferably has a structure including an ether group capable of enhancing the reduction resistance.

As such a negative electrode solvent, methoxycyclopentane, diethylene glycol dibutyl ether, and ethylene glycol dibenzyl ether can be used. These may be used alone or in combination of two or more thereof.

Further, an ionic liquid may be used as the negative electrode solvent. As the ionic liquid that hardly causes the reductive decomposition under the reducing atmosphere, 1-methyl-1-propylpyrrolidinium bis(trifluoromethanesulfonyl)imide, 1-methyl-1-propylpyrrolidinium bis(fluorosulfonyl)imide, triethyl-(2-methoxyethyl)phosphonium bis(trifluoromethanesulfonyl)imide, and triethyl-(2-methoxyethyl)phosphonium bis(fluoromethanesulfonyl)imide can be used. These may be used alone or in combination of two or more thereof. Among these, 1-methyl-1-propylpyrrolidinium bis(trifluoromethanesulfonyl)imide having high hydrophobicity is preferably used.

(Negative Electrode Supporting Salt)

The negative electrode supporting salt preferably includes a bulky and large anion. Accordingly, the negative electrode supporting salt can delocalize an electron state.

The hydrophobic solvent that can be used as the negative electrode solvent is a non-polar solvent having high hydrophobicity and low polarity. The polarity is an electrical bias existing in a molecule, and is generated by an electric dipole moment. A hydrophobic substance is generally an electrically neutral non-polar substance, and the supporting salt is a substance composed of a positive ion and a negative ion and is a polar molecule. In general, non-polar molecules are easily dissolved in the non-polar solvent, and polar molecules are easily dissolved in a polar solvent.

That is, the negative electrode supporting salt that is a polar substance is difficult to dissolve in the hydrophobic solvent that is a non-polar solvent. Therefore, the negative electrode supporting salt needs to be dissolved even in the non-polar solvent. In order to improve the solubility in the non-polar solvent, it is necessary to delocalize the electron state of the negative electrode supporting salt. The bulky and large anion can be used as a method for delocalizing the electron state.

As the anion of the negative electrode supporting salt, $N(SO_2CF_3)_2$, $N(SO_2CH_3)_2$, $N(SO_2C_4H_9)_2$, $N(SO_2C_2F_5)_2$, $N(SO_2C_4F_9)_2$, $N(SO_2F_3)(SO_2C_4F_9)$, $N(SO_2C_2F_5)(SO_2C_4F_9)$, $N(SO_2C_2F_4SO_2)$, $N(SO_2F)_2$, and $N(SO_2F)(SO_2CF_3)$ can be used. These may be used alone or in combination of two or more thereof. Among these, $N(SO_2CF_3)_2$ and $N(SO_2F)_2$ are preferred.

A cation of the negative electrode supporting salt may be an anion or a cation that passes through an ion-conductive separation membrane when the positive electrode active material is oxidized. As the cation of the negative electrode supporting salt, specifically, a lithium ion, a sodium ion, a potassium ion, a magnesium ion, an aluminum ion, a calcium ion, and an ammonium ion can be used.

The negative electrode electrolyte solution according to the present embodiment contains the negative electrode active material, the negative electrode supporting salt, and the negative electrode solvent, and can prevent electrolysis of water by using the solvent having an octanol-water partition coefficient $LogP_{ow}$ expressed by LogP of 1.5 or more as the negative electrode solvent since the negative electrode solvent is a hydrophobic solvent. Therefore, the negative electrode electrolyte solution according to the present embodiment can have a high voltage and a high energy density when used in the redox flow battery.

Since the negative electrode electrolyte solution according to the present embodiment contains a hydrophobic negative electrode solvent, it is possible to extract a voltage higher than that at electrolysis of water. Further, even in an open system, it is possible to prevent water intrusion.

Therefore, the negative electrode electrolyte solution according to the present embodiment can be effectively used as a negative electrode electrolyte solution for a redox flow battery, and can be suitably used for a redox flow battery using the negative electrode electrolyte solution, an application using the redox flow battery, and the like.

In the negative electrode electrolyte solution according to the present embodiment, the negative electrode solvent can include an ether group. Accordingly, the negative electrode solvent can improve resistance to reductive decomposition of the negative electrode solvent itself, and thus a negative electrode active material capable of exhibiting a higher voltage can be used. Therefore, the negative electrode electrolyte solution is less likely to cause reductive decomposition, and can be a stable negative electrode electrolyte solution. Therefore, in the negative electrode electrolyte solution, it is possible to extract a voltage equal to or higher than that at electrolysis of water. Further, the negative electrode electrolyte solution can prevent water intrusion even in the open system.

The negative electrode electrolyte solution according to the present embodiment can use, as the anion of the negative electrode supporting salt, one or more components selected from the group consisting of $N(SO_2CF_3)_2$, $N(SO_2CH_3)_2$, $N(SO_2C_4H_9)_2$, $N(SO_2C_2F_5)_2$, $N(SO_2C_4F_9)_2$, $N(SO_2F_3)(SO_2C_4F_9)$, $N(SO_2C_2F_5)(SO_2C_4F_9)$, $N(SO_2C_2F_4SO_2)$, $N(SO_2F)_2$, and $N(SO_2F)(SO_2CF_3)$. Accordingly, electrons of the negative electrode supporting salt can be delocalized, and thus the negative electrode supporting salt can be dissolved in a hydrophobic solvent having low polarity. Therefore, a negative electrode supporting salt dissolvable in the hydrophobic solvent having low polarity can be obtained for the negative electrode electrolyte solution.

The anion of the negative electrode supporting salt can has a solvation structure at a solid-liquid interface with water that has intruded. Therefore, even if a small amount of water intrudes, the anion of the negative electrode supporting salt has a solvation structure with respect to water molecules that have intruded, and thus can prevent the electrolysis of water.

Therefore, since the negative electrode electrolyte solution according to the present embodiment contains the negative electrode solvent having high hydrophobicity and high reduction resistance and the supporting salt including the anion in which the electrons are delocalized, it is possible to prevent water intrusion into the electrolyte solution without requiring a tight sealed structure even in the atmosphere, and to prevent occurrence of electrolysis of water even when water intrudes. Therefore, the negative electrode electrolyte solution can be more effectively used as a negative electrode electrolyte solution for a redox flow battery.

The negative electrode electrolyte solution according to the present embodiment can use, as the negative electrode solvent, one or more components selected from the group consisting of methoxycyclopentane, diethylene glycol dibutyl ether, and ethylene glycol dibenzyl ether. Accordingly, the negative electrode electrolyte solution can have high hydrophobicity.

The negative electrode electrolyte solution according to the present embodiment can use, as the negative electrode solvent, one or more components selected from the group consisting of 1-methyl-1-propylpyrrolidinium bis(trifluoromethanesulfonyl)imide, 1-methyl-1-propylpyrrolidinium bis(fluoromethanesulfonyl)imide, triethyl-(2-methoxyethyl)phosphonium bis(trifluoromethanesulfonyl)imide, and triethyl-(2-methoxyethyl)phosphonium bis(fluoromethanesulfonyl)imide. Accordingly, for the negative electrode electrolyte solution, it is possible to obtain a negative electrode solvent capable of exhibiting a hydrophobic effect and also exhibiting an effect as a negative electrode supporting salt.

In the negative electrode electrolyte solution according to the present embodiment, the negative electrode solvent can have a solubility of 5 g or less in 100 g of water at room temperature. Accordingly, the negative electrode solvent can have sufficient hydrophobicity, and thus the negative electrode electrolyte solution can have high hydrophobicity.

<Redox Flow Battery>

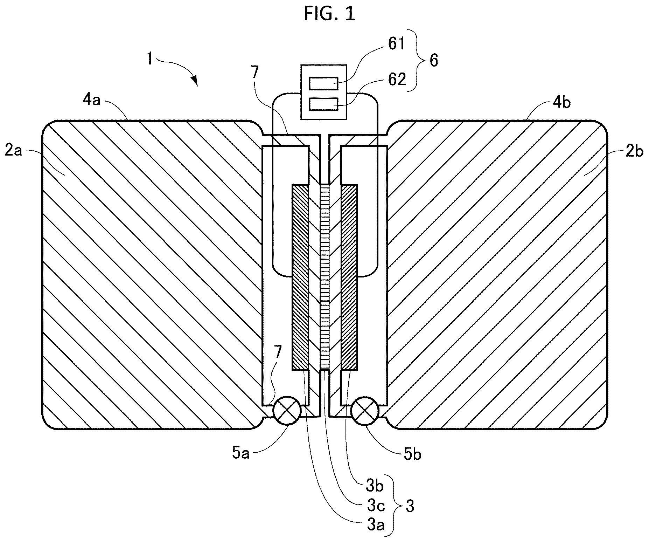

A redox flow battery (redox flow battery system) including the negative electrode electrolyte solution according to the embodiment of the present invention will be described. Figure 1 is a cross-sectional view schematically showing the redox flow battery using the negative electrode electrolyte solution according to the embodiment of the present invention. Figure 1 shows only elements necessary for describing the redox flow battery, but actually includes other configurations (not shown) for driving the redox flow battery.

As shown in Figure 1, a redox flow battery 1 includes a positive electrode electrolyte solution 2a, a negative electrode electrolyte solution for a redox flow battery (negative electrode electrolyte solution) 2b, a redox flow battery body (battery body) 3, a positive electrode electrolyte solution tank 4a, a negative electrode electrolyte solution tank 4b, a positive electrode pump 5a, a negative electrode pump 5b, a power supply/load unit 6, and a connecting pipe 7. The battery body 3, the positive electrode electrolyte solution tank 4a, the negative electrode electrolyte solution tank 4b, the positive electrode pump 5a, and the negative electrode pump 5b are connected via the connecting pipe 7. The positive electrode electrolyte solution 2a filled in the positive electrode electrolyte solution tank 4a and the negative electrode electrolyte solution 2b filled in the negative electrode electrolyte solution tank 4b are circulated and supplied in the battery body 3 by the positive electrode pump 5a and the negative electrode pump 5b, respectively.

A known positive electrode electrolyte solution can be used as the positive electrode electrolyte solution 2a.

The positive electrode electrolyte solution 2a may contain a mediator that is an electron transfer mediator from a positive electrode current collector to a positive electrode active material, and a conductive agent such as aluminum or carbon.

Since the negative electrode electrolyte solution according to the present embodiment is used as the negative electrode electrolyte solution 2b, the description thereof will be omitted.

The battery body 3 includes a positive electrode current collector 3a, a negative electrode current collector 3b, and an ion-conductive separation membrane (separator) 3c. The positive electrode electrolyte solution 2a supplied to the battery body 3 passes between the ion-conductive separation membrane 3c and the positive electrode current collector 3a, and returns into the positive electrode electrolyte solution tank 4a. The negative electrode electrolyte solution 2b supplied to the battery body 3 passes between the ion-conductive separation membrane 3c and the negative electrode current collector 3b, and returns into the negative electrode electrolyte solution tank 4b.

The positive electrode current collector 3a contains a positive electrode active material, a positive electrode solvent, and a positive electrode supporting salt, and the negative electrode current collector 3b contains a negative electrode active material, a negative electrode solvent, and a negative electrode supporting salt.

As the positive electrode active material, a transition metal oxide containing at least one of lithium, sodium, potassium, magnesium, and aluminum, an organic metal complex represented by ferrocene, and an organic compound capable of generating a radical represented by 2,2,6,6-tetramethylpiperidine-1-oxyl or quinone can be used.

The positive electrode solvent is a liquid capable of dissolving or dispersing the positive electrode active material, and examples thereof include, but is not particularly limited to, water, ethylene carbonate, propylene carbonate, methyl ethyl carbonate, diethyl carbonate, dimethyl carbonate, diethyl carbonate, dimethylformamide, an ionic liquid, methoxycyclopentane, 1-ethyl-3-methylimidazolium bis(trifluoromethanesulfonyl)imide, 1-butyl-2,3-dimethylimidazolium bis(trifluoromethanesulfonyl)imide, 1-butyl-2,3-dimethylimidazolium bis(fluorosulfonyl)imide, 1-butyl-3-methylimidazolium hexafluorophosphate, 1-methyl-1-propylimidazolium bis(trifluoromethanesulfonyl)imide, 1-methyl-1-propylimidazolium bis(fluorosulfonyl)imide, triethyl-(2-methoxyethyl)phosphonium bis(trifluoromethanesulfonyl)imide, triethyl-(2-methoxyethyl)phosphonium bis(fluorosulfonyl)imide, triethylmethoxymethylphosphonium bis(trifluoromethanesulfonyl)imide, and triethylmethoxymethylphosphonium bis(fluorosulfonyl)imide.

The positive electrode supporting salt may be a salt dissolving in the positive electrode solvent, and lithium hexafluorophosphate, sodium hexafluorophosphate, lithium bis(trifluoromethanesulfonyl)imide, lithium bis(fluorosulfonyl)imide, sodium bis(trifluoromethanesulfonyl)imide, sodium bis(fluorosulfonyl)imide, lithium bis(oxalato)borate, sodium bis(oxalato)borate, and the like are preferred.

When the positive electrode solvent is an ionic liquid, it is not necessary to add a positive electrode supporting salt since the ionic liquid is a positive electrode supporting salt.

The positive electrode current collector 3a transfers electrons from a surface thereof to the positive electrode active material and the mediator. That is, a material having a larger surface area is preferred since the material can cause a larger amount of electrochemical reaction. Since the electrons are at a positive electrode charging/discharging potential, it is necessary to use a material that is not oxidatively dissolved and oxidatively decomposed at least at the oxidation-reduction potentials of the positive electrode active material and the mediator. As such a material, carbon paper, carbon felt, and the like can be used.

A surface of the positive electrode current collector 3a may be treated, or a material that can be a positive electrode active material may be fixed to the surface of the positive electrode current collector 3a with a binder. Accordingly, the positive electrode current collector 3a can store charges on the surface thereof, and thus can cope with a case where a demand for large current discharging occurs instantaneously.

A known negative electrode active material, a known negative electrode solvent, and a known negative electrode supporting salt can be used as the negative electrode active material, the negative electrode solvent, and the negative electrode supporting salt contained in the negative electrode current collector 3b, and the negative electrode active material, the negative electrode solvent, and the negative electrode supporting salt contained in the negative electrode electrolyte solution according to the present embodiment can also be used.

The ion-conductive separation membrane 3c may be of a cation transfer type in which cations move from the positive electrode to the negative electrode during charging and from the negative electrode to the positive electrode during discharging, and of an anion transfer type in which anions move from the negative electrode to the positive electrode during charging and from the positive electrode to the negative electrode during discharging. When the ion-conductive separation membrane 3c is of the cation transfer type, a cation exchange membrane such as an oxide solid electrolyte or a polymer solid electrolyte can be used. On the other hand, when the ion-conductive separation membrane 3c is of the anion transfer type, an alkaline anion exchange membrane or the like can be used.

As the ion-conductive separation membrane 3c, a porous membrane having continuous pores smaller than a size of an active material can be used.

The positive electrode electrolyte solution tank 4a is a tank storing the positive electrode electrolyte solution 2a.

The negative electrode electrolyte solution tank 4b is a tank storing the negative electrode electrolyte solution 2b.

The positive electrode pump 5a is provided in the connecting pipe 7, and supplies the positive electrode electrolyte solution 2a in the positive electrode electrolyte solution tank 4a to the battery body 3.

The negative electrode pump 5b is provided in the connecting pipe 7, and supplies the negative electrode electrolyte solution 2b in the negative electrode electrolyte solution tank 4b to the battery body 3.

The power supply/load unit 6 includes a direct current (DC) power supply such as a battery and a load such as a motor, and the load functions during charging and the power supply functions during discharging.

The connecting pipe 7 connects the battery body 3 and the positive electrode electrolyte solution tank 4a, connects the battery body 3 and the negative electrode electrolyte solution tank 4b, circulates the positive electrode electrolyte solution 2a in the positive electrode electrolyte solution tank 4a between the battery body 3 and the positive electrode electrolyte solution tank 4a, and circulates the negative electrode electrolyte solution 2b in the negative electrode electrolyte solution tank 4b between the battery body 3 and the negative electrode electrolyte solution tank 4b.

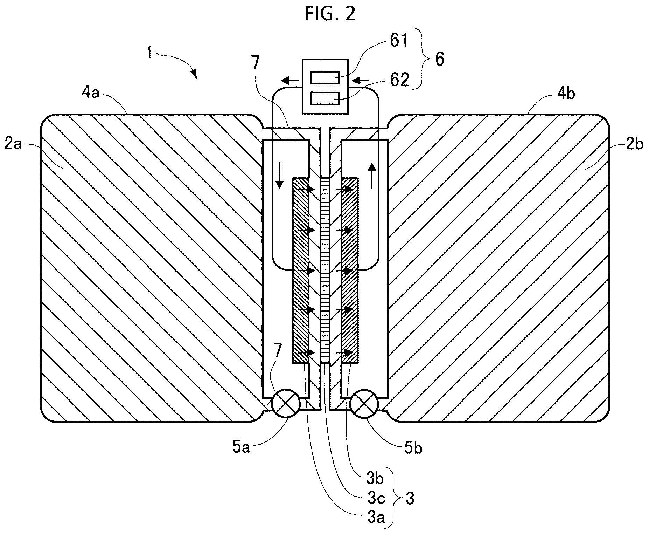

In the redox flow battery 1, in the case where the charged electrolyte solution is discharged, a load 61 in the power supply/load unit 6 is connected to the positive electrode current collector 3a and the negative electrode current collector 3b. Figure 2 is an explanatory view showing an example of a flow of electrons during discharging in the redox flow battery 1. Arrows in Figure 2 indicate a flow of electrons. As shown in Figure 2, the electrons move from the negative electrode active material contained in the negative electrode electrolyte solution 2b to the negative electrode current collector 3b, and move to the load 61 via a wire. Thereafter, the electrons pass through the load 61 and move from the positive electrode current collector 3a to the positive electrode active material contained in the positive electrode electrolyte solution 2a. At the same time, in order to compensate for charges, the cations pass through the ion-conductive separation membrane 3c and move from the negative electrode electrolyte solution 2b to the positive electrode electrolyte solution 2a. Further, the anions pass through the ion-conductive separation membrane 3c and move from the positive electrode to the negative electrode.

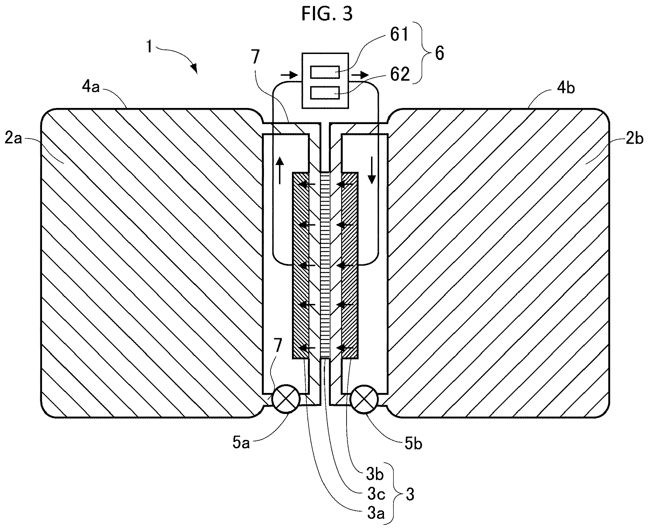

In the case where the discharged electrolyte solution is charged, the DC power supply 62 in the power supply/load unit 6 is connected to the positive electrode current collector 3a and the negative electrode current collector 3b. Figure 3 is an explanatory view showing an example of a flow of electrons during charging in the redox flow battery 1. Arrows in Figure 3 indicate a flow of electrons. As shown in Figure 3, the electrons move from the positive electrode active material contained in the positive electrode electrolyte solution 2a to the positive electrode current collector 3a, pass through the DC power supply 62, and then move from the negative electrode current collector 3b to the negative electrode active material contained in the negative electrode electrolyte solution 2b. At the same time, in order to compensate for charges, the anions pass through the ion-conductive separation membrane 3c and move from the negative electrode electrolyte solution 2b to the positive electrode electrolyte solution 2a. Further, the cations pass through the ion-conductive separation membrane 3c and move from the positive electrode to the negative electrode.

In this way, as described above, the redox flow battery 1 uses the negative electrode electrolyte solution according to the present embodiment as the negative electrode electrolyte solution 2b, and thus can prevent electrolysis of water. Therefore, the redox flow battery 1 can have a high voltage and a high energy density.

Since the redox flow battery 1 contains the negative electrode electrolyte solution according to the present embodiment, it is possible to configure a redox flow battery without using vanadium whose cost has significantly increased in recent years. Further, as described above, since a porous membrane can be used as the ion-conductive separation membrane, installation cost can be significantly reduced by using a porous membrane as the ion-conductive separation membrane.

Examples

Hereinafter, the embodiments will be described in more detail with reference to Examples and Comparative Examples, but the embodiments are not limited to these Examples.

<Example 1>

[Preparation of Redox Flow Battery]

(Preparation of Negative Electrode Electrolyte Solution)

1.988 g (16.3 mmol) of a negative electrode active material (2,3,5-trimethylpyrazine manufactured by Tokyo Chemical Industry Co., Ltd.) and 1.168 g (4.07 mmol) of a negative electrode supporting salt (lithium bis(trifluoromethanesulfonyl)imide (LiTFSI) manufactured by Tokyo Chemical Industry Co., Ltd.) were mixed to produce a mixture, and then 1.291 g of a hydrophobic solvent (methoxycyclopentane (MCP), $LogP_{ow}$: 1.575, manufactured by Tokyo Chemical Industry Co., Ltd.) as a negative electrode solvent was added to the mixture to obtain a negative electrode electrolyte solution. A total volume of the obtained negative electrode electrolyte solution was 4.07 mml, and a concentration of the negative electrode active material was 4.00 mol/L.

(Preparation of Positive Electrode Electrolyte Solution)

3.031 g (16.3 mmol) of a positive electrode active material (4-methoxy-2,2,6,6-tetramethylpiperidine-1-oxyl free radical manufactured by Tokyo Chemical Industry Co., Ltd.) and 3.043 g (16.3 mmol) of a positive electrode supporting salt (lithium bis(fluorosulfonyl)imide manufactured by Tokyo Chemical Industry Co., Ltd.) were mixed to produce a mixture, and then 0.774 g of ion-exchanged water was added to the mixture to obtain a positive electrode electrolyte solution. A total volume of the obtained positive electrode electrolyte solution was 5.00 mml, and a concentration of the positive electrode active material was 3.25 mol/L.

(Ion-conductive Separation Membrane)

As the ion-conductive separation membrane, Nafion (registered trademark) 117 (manufactured by Sigma-Aldrich Japan LLC) was used. Since Nafion (registered trademark) 117 was a proton foam, ion exchange from protons to lithium ions was performed by immersing Nafion (registered trademark) 117 in a 1 mol/L lithium hydroxide aqueous solution at room temperature for about 12 hours.

(Current Collector)

As the positive electrode current collector and the negative electrode current collector, carbon felt (diameter: 12 mm, thickness: 5 mm, surface area: about 850 $cm^2$, manufactured by EC Frontier Co, Ltd.) for a working electrode of a flow type entire electrolytic cell was used.

(Redox Flow Battery)

The positive electrode current collector was brought into contact with one surface of the ion-conductive separation membrane, and the negative electrode current collector was brought into contact with the other surface of the ion-conductive separation membrane, thereby preparing a power generation unit. The positive electrode electrolyte solution tank and the power generation unit, and the negative electrode electrolyte solution tank and the power generation unit were connected via a silicone rubber tube having an inner diameter of 2 mm, and a tube pump was connected to the silicone rubber tube to prepare a redox flow battery.

<Characteristics Evaluation of Redox Flow Battery>

As characteristic evaluation of the redox flow battery, a charging and discharging test was performed, and a charging capacity, a discharging capacity, a charging and discharging efficiency (coulomb efficiency), and a theoretical discharging capacity were measured.

[Charging and discharging Test]

In the atmosphere, the redox flow battery was used, and then the positive electrode electrolyte solution and the negative electrode electrolyte solution were injected into the positive electrode electrolyte solution tank and the negative electrode electrolyte solution tank, respectively, and were flowed at a rate of 10 mL/min by the tube pump. With the positive electrode electrolyte solution and the negative electrode electrolyte solution flowing, the battery was charged to 2.3 V at a constant current of 43.6 mA, and the charging capacity was measured. After a 10-minute rest, the battery was discharged to 1.0 V at a constant current of 43.6 mA, and the discharging capacity was measured. The coulomb efficiency expressed by the discharging capacity/charging capacity was obtained based on the obtained charging capacity and discharging capacity. The theoretical discharging capacity was also calculated.

<Example 2>

The same procedure as in Example 1 was carried out except that the configuration of the negative electrode electrolyte solution was changed.

(Preparation of Negative Electrode Electrolyte Solution)

2.346 g (16.3 mmol) of a negative electrode active material (2-methylquinoxaline manufactured by Tokyo Chemical Industry Co., Ltd.) and 2.827 g of a negative electrode solvent (1-methyl-1-propylpyrrolidinium bis(trifluoromethanesulfonyl)imide; PP13 TFSI, $LogP_{ow}$: 4.8165, manufactured by Tokyo Chemical Industry Co., Ltd.) were mixed to produce a negative electrode electrolyte solution. Since 1-methyl-1-propylpyrrolidinium bis(trifluoromethanesulfonyl)imide was a hydrophobic ionic liquid and also functioned as a supporting salt, no negative electrode supporting salt was separately added. A total volume of the negative electrode electrolyte solution was 4.07 mml, and a concentration of the active material was 4.00 mol/L.

<Comparative Example 1>

The same procedure as in Example 1 was carried out except that the configuration of the negative electrode electrolyte solution was changed.

(Preparation of Negative Electrode Electrolyte Solution)

1.988 g (16.3 mmol) of a negative electrode active material (lithium bis(trifluoromethanesulfonyl)imide manufactured by Tokyo Chemical Industry Co., Ltd.) and 1.168 g (4.07mmol) of a negative electrode supporting salt (N-N' dimethylformamide manufactured by Tokyo Chemical Industry Co., Ltd.) were mixed to produce a mixture, and then 1.411 g of a negative electrode solvent (2,3,5-trimethylpyrazine, $LogP_{ow}$: 1.40180, manufactured by Tokyo Chemical Industry Co., Ltd.) was added to the mixture to obtain a negative electrode electrolyte solution. A total volume of the obtained negative electrode electrolyte solution was 4.07 mml, and a concentration of the active material was 4.00 mol/L.

<Example 3>

[Preparation of Redox Flow Battery]

(Preparation of Negative Electrode Electrolyte Solution)

1.55 g of a negative electrode active material (graphite), 1.40 g of a negative electrode solvent (methoxycyclopentane (MCP), $LogP_{ow}$: 1.575, manufactured by Sigma-Aldrich Japan LLC.), and 0.59 g of a negative electrode supporting salt (lithium bis(trifluoromethanesulfonyl)imide (LiTFSI) manufactured by Kishida Chemical Co., Ltd.) were charged into a container and mixed to adjust a mixed solution. The adjusted mixed solution was stirred at a rotational speed of 2, 000 rpm for 60 seconds using a hybrid mixer. This stirring was repeated 5 times. Even after stirring, the negative electrode active material in the mixed solution was not dissolved and was in a dispersed state. A total volume of the negative electrode electrolyte solution was 2.76 mL, a concentration of the negative electrode active material was 25 vol%, and a salt concentration of the negative electrode electrolyte solution was 1 mol/L.

(Preparation of Positive Electrode Electrolyte Solution)

3.08 g of a positive electrode active material (lithium iron phosphate), 0.03 g of a positive electrode conductive material (carbon black), 2.30 g of a positive electrode solvent (methoxycyclopentane MCP manufactured by Sigma-Aldrich Japan LLC.), and 0.98 g of a positive electrode supporting salt (lithium bis(trifluoromethanesulfonyl)imide LiTFSI manufactured by Kishida Chemical Co., Ltd.) were charged into a container and mixed to adjust a mixed solution. The adjusted mixed solution was stirred at a rotational speed of 2,000 rpm for 60 seconds using a hybrid mixer. This stirring was repeated 5 times. After stirring, the positive electrode active material was not dissolved and was also in a dispersed state. A total volume of the obtained positive electrode electrolyte solution was 4.28 mL, a concentration of the positive electrode active material was 25 vol%, and a salt concentration of the positive electrode electrolyte solution was 1 mol/L.

(Ion-conductive Separation Membrane)

As the ion-conductive separation membrane, a polyethylene microporous membrane (manufactured by W-SCOPE Co., Ltd.) was used.

(Current Collector)

An aluminum foil was used as the positive electrode current collector, and a copper foil was used as the negative electrode current collector.

(Redox Flow Battery)

A rib made of polyethylene was disposed such that a space of 100 μm was formed between the ion-conductive separation membrane and the positive electrode current collector, and a rib made of polyethylene was disposed such that a space of 100 μm was formed between the ion-conductive separation membrane and the negative electrode current collector, thereby preparing a power generation unit. The positive electrode electrolyte solution tank and the power generation unit, and the negative electrode electrolyte solution tank and the power generation unit were connected via an ethylene propylene diene rubber tube having an inner diameter of 2 mm, and a tube pump was connected to the ethylene propylene diene rubber tube to prepare a redox flow battery.

<Characteristics Evaluation of Redox Flow Battery>

As characteristic evaluation of the redox flow battery, a charging and discharging test was performed, and a charging capacity, a discharging capacity, a coulomb efficiency, and a theoretical discharging capacity were measured.

<Charging and discharging Test>

In the atmosphere, the redox flow battery was used, and then the positive electrode electrolyte solution and the negative electrode electrolyte solution were injected into the positive electrode electrolyte solution tank and the negative electrode electrolyte solution tank, respectively, and were flowed at a rate of 10 mL/min by the tube pump. The positive electrode electrolyte solution was flowed into a space formed by the rib provided between the ion-conductive separation membrane and the positive electrode current collector. The negative electrode electrolyte solution was flowed into a space formed by the rib provided between the ion-conductive separation membrane and the negative electrode current collector.
With the positive electrode electrolyte solution and the negative electrode electrolyte solution flowing, the battery was charged to 4 V at a constant current of 43.6 mA, and the charging capacity was measured. After a 10-minute rest, the battery was discharged to 1.0 V at a constant current of 43.6 mA, and the discharging capacity was measured. The coulomb efficiency was obtained based on the obtained charging capacity and discharging capacity. The theoretical discharging capacity was also calculated.

<Example 4>

The same procedure as in Example 3 was carried out except that the type of the negative electrode solvent constituting the negative electrode electrolyte solution, and the type and the addition amount of the positive electrode solvent constituting the positive electrode electrolyte solution were changed.

(Preparation of Negative Electrode Electrolyte Solution)

The same procedure as in Example 3 was carried out except that the negative electrode solvent was changed to diethylene glycol dibutyl ether (DEGDBE, LogP$_{\text{OW}}$: 1.92, manufactured by Tokyo Chemical Industry Co., Ltd.). After stirring, the negative electrode active material in the mixed solution was not dissolved and was also in a dispersed state. A total volume of the negative electrode electrolyte solution was 2.76 mL, a concentration of the negative electrode active material was 25 vol%, and a salt concentration of the negative electrode electrolyte solution was 1 mol/L.

(Preparation of Positive Electrode Electrolyte Solution)

The same procedure as in Example 3 was carried out except that the positive electrode solvent was changed to diethylene glycol dibutyl ether DEGDBE (manufactured by Tokyo Chemical Industry Co., Ltd.) and the addition amount of the positive electrode solvent was changed to 2.36 g. After stirring, the positive electrode active material was not dissolved and was also in a dispersed state. A total volume of the obtained positive electrode electrolyte solution was 4.28 mL, a concentration of the positive electrode active material was 20 vol%, and a salt concentration of the positive electrode electrolyte solution was 1 mol/L.

<Example 5>

The same procedure as in Example 3 was carried out except that the type and the addition amount of the negative electrode solvent constituting the negative electrode electrolyte solution, and the type and the addition amount of the positive electrode solvent constituting the positive electrode electrolyte solution were changed.

(Preparation of Negative Electrode Electrolyte Solution)

The same procedure as in Example 3 was carried out except that the negative electrode solvent was changed to ethylene glycol dibenzyl ether (EGDBE, LogP$_{\text{OW}}$: 3.42, manufactured by Tokyo Chemical Industry Co., Ltd.) and the addition amount of the negative electrode solvent was changed to 1.72 g. After stirring, the negative electrode active material in the mixed solution was not dissolved and was also in a dispersed state. A total volume of the negative electrode electrolyte solution was 2.76 mL, a concentration of the negative electrode active material was 25 vol%, and a salt concentration of the negative electrode electrolyte solution was 1 mol/L.

(Preparation of Positive Electrode Electrolyte Solution)

The same procedure as in Example 3 was carried out except that the positive electrode solvent was changed to ethylene glycol dibenzyl ether EGDBE (manufactured by Tokyo Chemical Industry Co., Ltd.) and the addition amount of the positive electrode solvent was changed to 2.83 g. After stirring, the positive electrode active material was not dissolved and was also in a dispersed state. A total volume of the obtained positive electrode electrolyte solution was 4.28 mL, a concentration of the positive electrode active material was 20 vol%, and a salt concentration of the positive electrode electrolyte solution was 1 mol/L.

<Example 6>

The same procedure as in Example 3 was carried out except that the types and the addition amounts of the negative electrode solvent and the negative electrode supporting salt that constitute the negative electrode electrolyte solution, and the type and the addition amount of the positive electrode solvent constituting the positive electrode electrolyte solution were changed.

(Preparation of Negative Electrode Electrolyte Solution)

The same procedure as in Example 3 was carried out except that the negative electrode solvent was changed to diethylene glycol dibutyl ether (DEGDBE, LogP$_{\text{OW}}$: 1.92, manufactured by Tokyo Chemical Industry Co., Ltd.), the addition amount of the negative electrode solvent was changed to 1.46 g, the negative electrode supporting salt was changed to lithium bis(pentafluoroethanesulfonyl)imide LiBETI, and the addition amount of the negative electrode supporting salt was changed to 0.80 g. After stirring, the negative electrode active material in the mixed solution was not dissolved and was also in a dispersed state. A total volume of the negative electrode electrolyte solution was 2.76 mL, a concentration of the negative electrode active material was 25 vol%, and a salt concentration of the negative electrode electrolyte solution was 1 mol/L.

(Preparation of Positive Electrode Electrolyte Solution)

The same procedure as in Example 3 was carried out except that the positive electrode solvent was changed to diethylene glycol dibutyl ether DEGDBE (manufactured by Tokyo Chemical Industry Co., Ltd.), the addition amount of the positive electrode solvent was changed to 2.40 g, the positive electrode supporting salt was changed to lithium bis(pentafluoroethanesulfonyl)imide LiBETI, and the addition amount of the negative electrode supporting salt was changed to 1.32 g. After stirring, the positive electrode active material was not dissolved and was also in a dispersed state. A total volume of the obtained positive electrode electrolyte solution was 4.28 mL, a concentration of the positive electrode active material was 20 vol%, and a salt concentration of the positive electrode electrolyte solution was 1 mol/L.

<Comparative Example 2>

The same procedure as in Example 3 was carried out except that the types and the addition amounts of the negative electrode solvent and the negative electrode supporting salt that constitute the negative electrode electrolyte solution, and the type and the addition amount of the positive electrode solvent constituting the positive electrode electrolyte solution were changed.

(Preparation of Negative Electrode Electrolyte Solution)

The same procedure as in Example 3 was carried out except that the negative electrode solvent was changed to a mixture ($LogP_{ow}$: 0.707, manufactured by Tokyo Chemical Industry Co., Ltd.) containing ethylene carbonate EC, ethyl methyl carbonate EMC, and diethyl carbonate DMC at an equal volume ratio, the addition amount of the negative electrode solvent was changed to 2.10 g, the negative electrode supporting salt was changed to lithium hexafluorophosphate $LiPF_6$ (manufactured by Kishida Chemical Co., Ltd.), and the addition amount of the negative electrode supporting salt was changed to 0.31 g. After stirring, the negative electrode active material in the mixed solution was not dissolved and was also in a dispersed state. A total volume of the negative electrode electrolyte solution was 2.76 mL, a concentration of the negative electrode active material was 25 vol%, and a salt concentration of the negative electrode electrolyte solution was 1 mol/L.

(Preparation of Positive Electrode Electrolyte Solution)

The same procedure as in Example 3 was carried out except that the positive electrode solvent was changed to a mixture (manufactured by Kishida Chemical Co., Ltd.) containing ethylene carbonate EC, ethyl methyl carbonate EMC, and diethyl carbonate DMC at an equal volume ratio, the addition amount of the positive electrode solvent was changed to 3.46 g, the positive electrode supporting salt was changed to lithium hexafluorophosphate $LIPF_6$ (manufactured by Kishida Chemical Co., Ltd.), and the addition amount of the positive electrode supporting salt was changed to 0.31 g. After stirring, the positive electrode active material was not dissolved and was also in a dispersed state. A total volume of the obtained positive electrode electrolyte solution was 4.28 mL, a concentration of the positive electrode active material was 20 vol%, and a salt concentration of the positive electrode electrolyte solution was 1 mol/L.

Measurement results of the charging and discharging capacity, the discharging capacity, the coulomb efficiency, and the theoretical discharging capacity of each of Examples and Comparative Examples are shown in Table 1.

[Table 1]

| | Negative electrode electrolyte solution | | | | Redox flow battery | | | |
| | Negative electrode active material | Negative electrode solvent | | Negative electrode supporting salt | Charging capacity [mAh] | Discharging capacity [mAh] | Coulomb efficiency [%] | Theoretical discharging capacity [mAh] |
| | | Type | LogP | | | | | |
| Example 1 | 2,3,5-trimethylpyrazine | MCP | 1.58 | LiTFSI | 431 | 408 | 94 | 436 |
| Example 2 | 2-methylquinoxaline | 1-methyl-1-propylpyrrolidinium bis (trifluoromethanesul -fonyl) imide | 4.82 | - | 428 | 403 | 94 | 436 |
| Example 3 | Graphite | MCP | 1.58 | LiTFSI | 475 | 400 | 84 | 436 |
| Example 4 | Graphite | DEGDBE | 1.92 | LiTFSI | 472 | 406 | 86 | 436 |
| Example 5 | Graphite | EGDBE | 3.42 | LiTFSI | 468 | 389 | 83 | 436 |
| Example 6 | Graphite | DEGDBE | 1. 92 | LiBETI | 470 | 409 | 87 | 436 |
| Comparative Example 1 | Lithium bis (trifluor omethanesulf onyl) imide | 2,3,5-trimethylpyrazine | 1.40 | LiTFSI | 442 | 125 | 28 | 436 |
| Comparative Example 2 | Graphite | EC/EMC/DMC | 0.71 | LiPF$_6$ | 465 | 198 | 43 | 436 |

EP 3 955 351 A1

From Table 1, in Examples 1 to 6, the coulomb efficiency is 83% or more. In particular, in Examples 1 and 2, the coulomb efficiency is 94%. On the other hand, in Comparative Examples 1 and 2, the coulomb efficiency is 43% or less. In Examples 1 to 6, the discharging capacity is 389 mAh or more. On the other hand, in Comparative Examples 1 and 2, the discharging capacity is 198 mAh or less. A value of LogP indicates a degree of hydrophobicity. Unlike the negative electrode electrolyte solutions of Comparative Examples 1 and 2, the negative electrode electrolyte solutions of Examples 1 to 6 each use a highly hydrophobic negative electrode solvent having an octanol-water partition coefficient $LogP_{ow}$ of 1.58 or more, and thus electrolysis of water is less likely to occur even at a high voltage in the atmosphere. Therefore, the redox flow battery constituted by using the negative electrode electrolyte solution can have an increased coulomb efficiency and a high capacity.

In Example 2, it is confirmed that a green LED emits light when the green LED is connected to the positive electrode current collector and the negative electrode current collector. Since the green LED needs 2.0 V or more to emit light, it is confirmed in Example 2 that a voltage equal to or higher than a theoretical voltage (1.3 V) at electrolysis of water in the atmosphere containing moisture is extracted, and a high mass energy density is obtained. Therefore, it is confirmed that it is effective to use the negative electrode electrolyte solution according to the present embodiment in order to achieve a voltage of 2.0 V equal to or higher than the voltage at the electrolysis of water, while preventing the electrolysis of water.

In Comparative Example 1, regarding a difference between the charging capacity and the theoretical discharging capacity calculated based on the mass of the negative electrode active material used, the charging capacity is higher than the theoretical discharging capacity. This indicates that the current is consumed in addition to charging of the negative electrode active material, and it is presumed that electrolysis of water occurs during charging because a non-hydrophobic solvent is used in Comparative Example 1.

Therefore, when the negative electrode electrolyte solution according to the present embodiment is used in a redox flow battery, a high voltage and a high energy density can be obtained, and thus excellent charging and discharging characteristics can be obtained. Therefore, the redox flow battery using the negative electrode electrolyte solution according to the present embodiment is easy to handle and has a high energy density, and thus, it is possible to store a large amount of electrical energy on the same scale when, for example, the redox flow battery is applied to an energy storage facility. Further, an electric vehicle can travel longer distances by a single electrolyte solution change.

The redox flow battery of the present invention is not limited to the embodiments described above and shown in the drawings, and various modifications can be made without departing from the gist of the invention. That is, the redox flow battery may be applied to a system in which charging and discharging are completed only by passing the electrolyte solution through the redox flow battery body once, instead of circulating the electrolyte solution through the redox flow battery body to charge and discharge the redox flow battery body. Further, the redox flow battery of the present invention can be applied not only to energy storage facilities attached to power generation facilities and electric vehicles, but also to ships, airplanes, and the like driven by using at least part of electric power from redox flow batteries mounted therein, and can also be applied to houses and factories in power consumption facilities.

Although the embodiments have been described above, the embodiments have been presented as examples and do not limit the present invention. The embodiments can be implemented in various other forms, and various combinations, omissions, substitutions, changes, and the like can be made without departing from the gist of the invention. These embodiments and modifications thereof are included in the scope and gist of the invention, and are also included in the scope of the invention recited in the claims and the equivalent scope thereof.

The present application claims the benefits of Japanese Patent Application No. 2019-073282 filed on April 8, 2019, and the contents thereof are incorporated by reference in entirety thereof.

Description of the Reference Numerals

1 redox flow battery; 2a positive electrode electrolyte solution; 2b negative electrode electrolyte solution (for a redox flow battery); 3 redox flow battery body (battery body); 3a positive electrode current collector; 3b negative electrode current collector; 3c ion-conductive separation membrane; 4a positive electrode electrolyte solution tank; 4b negative electrode electrolyte solution tank; 5a positive electrode pump; 5b negative electrode pump; 6 power supply/load unit; 61 load; 62 DC power supply

**Claims**

1. A negative electrode electrolyte solution for a redox flow battery, comprising:

> a negative electrode active material;
> a negative electrode supporting salt; and

a negative electrode solvent,
wherein the negative electrode solvent is a solvent having an octanol-water partition coefficient $LogP_{ow}$ expressed by LogP of 1.5 or more.

2. A negative electrode electrolyte solution for a redox flow battery according to claim 1, wherein the negative electrode solvent includes an ether group.

3. A negative electrode electrolyte solution for a redox flow battery according to claim 2, wherein an anion of the negative electrode supporting salt is one or more components selected from the group consisting of $N(SO_2CF_3)_2$, $N(SO_2CH_3)_2$, $N(SO_2C_4H_9)_2$, $N(SO_2C_2F_5)_2$, $N(SO_2C_4F_9)_2$, $N(SO_2F_3)(SO_2C_4F_9)$, $N(SO_2C_2F_5)(SO_2C_4F_9)$, $N(SO_2C_2F_4SO_2)$, $N(SO_2F)_2$, and $N(SO_2F)(SO_2CF_3)$.

4. A negative electrode electrolyte solution for a redox flow battery according to any of claims 2 and 3, wherein the negative electrode solvent is one or more components selected from the group consisting of methoxycyclopentane, diethylene glycol dibutyl ether, and ethylene glycol dibenzyl ether.

5. A negative electrode electrolyte solution for a redox flow battery according to claim 1, wherein the negative electrode solvent is one or more components selected from the group consisting of 1-methyl-1-propylpyrrolidinium bis(trifluoromethanesulfonyl)imide, 1-methyl-1-propylpyrrolidinium bis(fluoromethanesulfonyl)imide, triethyl-(2-methoxyethyl)phosphonium bis(trifluoromethanesulfonyl)imide, and triethyl-(2-methoxyethyl)phosphonium bis(fluoromethanesulfonyl)imide.

6. A negative electrode electrolyte solution for a redox flow battery according to any of claims 1 to 5, wherein the negative electrode solvent has a solubility of 5 g or less in 100 g of water at room temperature.

7. A redox flow battery comprising:

a positive electrode electrolyte solution;
a positive electrode current collector that oxidizes and reduces a positive electrode active material included in the positive electrode electrolyte solution;
a negative electrode electrolyte solution;
a negative electrode current collector that oxidizes and reduces a negative electrode active material included in the negative electrode electrolyte solution; and
an ion-conductive separator that separates the positive electrode electrolyte solution and the negative electrode electrolyte solution,
wherein the negative electrode electrolyte solution is the negative electrode electrolyte solution for a redox flow battery according to any of claims 1 to 6.

FIG. 1

FIG. 2

EP 3 955 351 A1

FIG. 3

**EP 3 955 351 A1**

<table>
<tr><td colspan="2">INTERNATIONAL SEARCH REPORT</td><td>International application No.<br>PCT/JP2020/015759</td></tr>
</table>

A. CLASSIFICATION OF SUBJECT MATTER
H01M 8/02(2016.01)i; H01M 8/10(2016.01)i; H01M 8/18(2006.01)i
FI: H01M8/18; H01M8/02; H01M8/10 101

According to International Patent Classification (IPC) or to both national classification and IPC

B. FIELDS SEARCHED

Minimum documentation searched (classification system followed by classification symbols)
H01M8/02; H01M8/10; H01M8/18

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2018-18816 A (PANASONIC IP MANAGEMENT CO., LTD.) 01.02.2018 (2018-02-01) claims 1, 11, 16, paragraphs [0006], [0039], [0040], [0056]-[0058], [0147]-[0153], [0197]-[0212], fig. 5 | 1-7 |
| A | JP 2013-251211 A (HITACHI, LTD.) 12.12.2013 (2013-12-12) claim 5, paragraphs [0016], [0028]-[0035], [0053]-[0056], fig. 1 | 1-7 |
| A | WO 2011/101992 A1 (TOYOTA MOTOR CORP.) 25.08.2011 (2011-08-25) claims 1, 7, paragraphs [0009]-[0013], [0018] | 1-7 |

☐ Further documents are listed in the continuation of Box C.　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
18 June 2020 (18.06.2020)

Date of mailing of the international search report
30 June 2020 (30.06.2020)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

19

**INTERNATIONAL SEARCH REPORT**
Information on patent family members

| International application No. |
| --- |
| PCT/JP2020/015759 |

| Patent Documents referred in the Report | Publication Date | Patent Family | Publication Date |
| --- | --- | --- | --- |
| JP 2018-18816 A | 01 Feb. 2018 | US 2018/0026293 A1 claims 1, 11, 16, paragraphs [0005], [0055], [0056], [0072]-[0074], [0163]-[0169], [0213]-[0228], fig. 5 | |
| JP 2013-251211 A | 12 Dec. 2013 | (Family: none) | |
| WO 2011/101992 A1 | 25 Aug. 2011 | US 2012/0315553 A1 claims 1, 7, paragraphs [0014]-[0019], [0029] EP 2541665 A1 CN 102771000 A KR 10-2012-0118848 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5468090 B

- JP 2019073282 A